# EUROPÄISCHE PATENTSCHRIFT

(11) **EP 0 702 067 B1**
(45) Veröffentlichungstag und Bekanntmachung des Hinweises auf die Patenterteilung: **29.03.2000**
(21) Anmeldenummer: 95113984.9
(22) Anmeldetag: 06.09.1995
(51) Int. Cl.: C09D 175/16, C09D 167/06, C08F 283/00, C09D 5/03

(54) **Bindemittel für Pulverlacke**
Binders for powder coatings
Liants pour peintures en poudre

(30) Priorität: 14.09.1994 DE 4432645
(43) Veröffentlichungstag der Anmeldung: 20.03.1996
(73) Patentinhaber: HOECHST AKTIENGESELLSCHAFT, 65926 Frankfurt am Main (DE)
(72) Erfinder: Brindöpke, Gerhard, Dr., D-65843 Sulzbach (DE); Fink, Dietmar, D-65232 Taunusstein (DE)
(74) Vertreter: Zounek, Nikolai, Dipl.-Ing.

(56) Entgegenhaltungen:
- DE-A- 4 228 514
- FR-A- 2 120 807
- US-A- 4 390 662

## Beschreibung

Aus EP-A-0 410 242 sind Polyurethane mit einem Gehalt an (Meth)acryloylgruppen bekannt, die durch Umsetzung von
A) 40 bis 80 Teilen eines organischen Polyisocyanats mit
B) 15 bis 50 Teilen eines (Meth)acryloylgruppen-aufweisenden einwertigen Alkohols und
C) 2 bis 20 Teilen einer weiteren Aufbaukomponente, bestehend aus mindestens einer (Meth)acryloylgruppen-freien Verbindung mit gegenüber Isocyanatgruppen reaktionsfähigen Gruppen hergestellt werden.

Diese Polyurethane dienen als Bindemittel in Pulverlacken. Die Blockstabilität dieser Lacke ist jedoch in vielen Fällen nicht ausreichend. In der EP-A 0 585 742 wird beschrieben, daß die Blockstabilität von Lacken auf Basis dieser Polyurethane verbessert werden kann, wenn man sie mit festen, ungesättigten Polyestern abmischt. Diese Polyester sind billiger als die genannten Polyurethane, daher ergibt sich durch Ersatz eines Teils der Polyurethane durch die ungesättigten Polyester insgesamt eine Verbilligung für die Pulverlacke.

Mit solchen Pulverlacken lassen sich auch temperaturempfindliche Substrate beschichten, wie Holz, Holzwerkstoffe und Kunststoffe, da sie durch UV-Bestrahlung oder durch Zusatz von Peroxiden schon bei niedrigen Temperaturen aushärten.

Für die Anwendung ist es wünschenswert, daß diese Pulverlacke bei dieser erniedrigten Einbrenntemperatur ebenso gut verlaufen und ebenso glatte Oberflächen liefern wie herkömmliche Pulverlacke. Die Bindemittel müssen daher schon bei einer niedrigen Verarbeitungstemperatur möglichst gut und schnell verlaufen. Häufig werden zu solch einem Zweck Verlaufsadditive zugesetzt, die die Schmelzviskosität des Bindemittels deutlich herabsetzen. Diese Produkte reagieren jedoch bei der Härtung nicht mit. Dies verschlechtert die Beständigkeit des Lackes gegenüber Chemikalien. In der DE-A 42 28 514 wird ein Bindemittel für Pulverlacke beschrieben, das aus einem festen ungesättigten Polyester und einem (Meth)Acrylolygruppen enthaltenden Polyurethan besteht.

Aufgabe der Erfindung war es nun, solche Bindemittel für Pulverlacke bereitzustellen, die durch UV- oder Elektronen-Bestrahlung oder durch Zusatz von Peroxiden härtbar sind und die weiter verbesserte Verlaufseigenschaften aufweisen, ohne daß die daraus formulierten Pulverlacke ihre Lagerstabilität verlieren.

Es wurde nun gefunden, daß Mischungen aus einem festen, ungesättigten Polyester A, einem (Meth)Acryloylgruppen enthaltenden Polyurethan B und einem unter den Härtungsbedingungen reaktiven, bei Raumtemperatur festen Verlaufsadditiv C diese gewünschte Eigenschaftskombination besitzen.

Gegenstand der Erfindung sind somit Bindemittel für Pulverlacke, die einen festen, ungesättigten Polyester A, ein (Meth)Acryloylgruppen enthaltendes Polyurethan B und ein unter den Härtungsbedingungen reaktives, bei Raumtemperatur festes Verlaufsadditiv C mit mindestens einer olefinischen Doppelbindung und mindestens einer polaren elektronegativen Gruppe ausgewählt aus Carbonsäureester-Gruppen, Carbonsäureamidgruppen, Carbonsäurehydrazidgruppen, Urethan- und Harnstoff-gruppen enthalten.

Für die Erfindung sind ungesättigte Polyester A geeignet, die als Endgruppen überwiegend Hydroxylgruppen und daneben Carboxylgruppen enthalten; der Gehalt an Hydroxylgruppen entspricht OH-Zahlen zwischen 5 und 120 mg KOH/g, insbesondere zwischen 10 und 100 mg KOH/g. Die Säurezahlen der Polyester liegen zwischen 2 und 60, vorzugsweise zwischen 2 und 40 mg KOH/g.

Die Viskosität der erfindungsgemäßen Polyester A beträgt in der Schmelze bei 200 °C weniger als 100 000, insbesondere weniger als 40 000 mPa·s und der Schmelzpunkt liegt zwischen 50 und 130 °C, vorzugsweise zwischen 65 und 120 °C. Der Massengehalt an ungesättigten (Alken-) Gruppen (berechnet als -C=C-Gruppe) im Polyester A soll 2 bis 20, vorzugsweise 2 bis 15, insbesondere 2 bis 10 % betragen.

Die ungesättigten, hydroxylgruppenhaltigen festen Polyester A werden hergestellt durch die an sich bekannte Kondensation von mehrwertigen Alkoholen und ungesättigten Dicarbonsäuren, deren Anhydriden oder einem Gemisch aus Säuren und Anhydriden, gegebenenfalls zusätzlich gesättigten Carbonsäuren. Gegebenenfalls können auch Ester dieser Carbonsäuren mit Alkoholen eingesetzt werden, die unter den Kondensationsbedingungen flüchtig sind (z.B. Methylester), oder Halbester von mehrwertigen Alkoholen (z.B. Glykolester).

Als ungesättigte Dicarbonsäuren kommen insbesondere in Frage Maleinsäure, Citraconsäure, Itaconsäure sowie deren Anhydride, Fumarsäure und Mesaconsäure.

Die gesättigten Carbonsäuren können aliphatische, cycloaliphatische, aromatische und/oder heterocyclische Mono-, Di- oder Polycarbonsäuren sein und gegebenenfalls, z.B. durch Halogenatome, substituiert sein. Bevorzugt werden Dicarbonsäuren und/oder deren Anhydride. Als Beispiele hierfür seien genannt:

Dicarbonsäuren wie Bernsteinsäure, Adipinsäure, Korksäure, Azelainsäure, Sebacinsäure, Phthalsäure, Terephthalsäure, Isophthalsäure, Tetrahydrophthalsäure, Hexahydrophthalsäure, Di- und Tetrachlorphthalsäure, Endomethylentetrahydrophthalsäure und ihr Hexachlorderivat, Glutarsäure, Terephthalsäuredimethylester, Terephthalsäure-bis-glykolester; Monocarbonsäuren wie Dimethylolpropionsäure, Benzoesäure, p-tert.-Butylbenzoesäure oder Hexahydrobenzoesäure; Polycarbonsäuren wie Trimellithsäure und Pyromellithsäure; weiterhin dimere und trimere Fettsäuren, z.B. abgeleitet von Ölsäure, gegebenenfalls in Mischung mit monomeren Fettsäuren.

Als mehrwertige Alkohole sind Diole, Triole und Polyole mit vier und mehr Hydroxylgruppen geeignet, sie können aliphatisch linear oder verzweigt, oder gemischt aromatisch/aliphatisch sein. Bevorzugt werden Äthylenglykol, Propylenglykol-(1,2) und -(1,3), Butylenglykol-(1,4)- und -(2,3), Butendiol-(1,4), Di-β-hydroxyäthylbutandiol, Hexandiol-(1,6), Octandiol-(1,8), Neopentylglykol, 2,2-Bis-(4-(β-hydroxyäthoxy)-phenyl)-propan, 2-Methyl-1,3-propandiol, Xylylenglykol und die Polyole Glycerin, Trimethylolpropan, Hexantriol-(1,2,6), Butantriol-(1,2,4), Tris-(β-hydroxyäthyl)-isocyanurat, Trimethyloläthan, Pentaerythrit, Chinit, Mannit und Sorbit, Formose und deren Hydroxyalkylierungsprodukte, Methylglykoside, ferner die Oligo- und Polyoxyalkylenglykole wie Diäthylenglykol, Triäthylenglykol, Tetraäthylenglykol, Polyäthylenglykole, Dipropylenglykol, Tripropylenglykol, Polypropylenglykole, Dibutylenglykol, äth- oder propoxyliertes Butendiol und Polybutylenglykole in Frage. Auch Mono- und Polyester aus Lactonen, z.B. ε-Caprolacton oder Hydroxycarbonsäuren, wie z.B. Hydroxypivalinsäure, ω-Hydroxydecansäure, ε-Hydroxycapronsäure können eingesetzt werden; Polyester aus den oben genannten Polycarbonsäuren bzw. deren Derivate und Polyphenolen, wie Hydrochinon, Bisphenol-A, 4,4'-Dihydroxybiphenyl oder Bis-(4-hydroxyphenyl)-sulfon; mit Fettsäuren modifizierte Polyester (Ölalkyde) sowie natürlich vorkommende gesättigte oder ungesättigte Polyester, ihre Abbauprodukte oder Umesterungsprodukte mit Polyolen, wie Rizinusöl, Tallöl, Sojaöl, Leinöl; Polyester der Kohlensäure, die aus Hydrochinon, Diphenylolpropan, p-Xylylenglykol, Äthylenglykol, Butandiol oder Hexandiol-1,6 und andere Polyolen durch übliche Kondensationsreaktionen, z.B. mit Phosgen oder Diäthyl- bzw. Diphenylcarbonat, oder aus cyclischen Carbonaten, wie Glykolcarbonat oder Vinylidencarbonat, durch Polymerisation in bekannter Weise erhältlich sind.

Geeignete Polyester A sind z.B. auch die Reaktionsprodukte von Dicarbonsäuren und Glycidylverbindungen, wie sie z.B. in der DE-OS 24 10 513 beschrieben sind. Beispiele für Glycidylverbindungen, die hierfür verwendet werden können, sind Ester des 2,3-Epoxy-1-propanols mit monobasischen Säuren, die 4 bis 18 Kohlenstoffatome haben, wie Glycidylpalmitat, Glycidyllaurat und Glycidylstearat oder der Glycidylester eines Gemisches von Neononan-, -decan- und -undecansäure, der im Handel unter dem Namen ®Cardura E10 (Shell Chemicals) erhältlich ist; Alkylenoxide mit 4 bis 18 Kohlenstoffatomen wie Butylenoxid und Glycidyläther, wie Octylenglycidyläther. Als Dicarbonsäuren können hier sämtliche der oben aufgeführten Dicarbonsäuren verwendet werden.

Bevorzugte Komponenten sind auch monomere Ester, z.B. Dicarbonsäure-bis(hydroxyalkyl)ester, Monocarbonsäureester von mehr als 2-wertigen Polyolen und Oligoester, die durch Kondensationsreaktionen aus in der Lackchemie üblichen Rohstoffen hergestellt werden können.

Die festen ungesättigten Polyester A können auf an sich bekannte Weise durch Kondensation in einer Inertgasatmosphäre bei Temperaturen von 100 bis 260 °C, vorzugsweise 130 bis 240 °C, in der Schmelze oder in azeotroper Fahrweise gewonnen werden, wie es z.B. in Methoden der Organischen Chemie (Houben-Weyl), Bd. 14/2, Seiten 1 bis 5, 21 bis 23, und 40 bis 44, Georg Thieme Verlag, Stuttgart, 1963 oder bei C.R. Martens, Alkyd Resins, Seiten 51 bis 59, Reinhold Plastics Appl. Series, Reinhold Publishing Comp., New York, 1961, beschrieben ist.

Der zweite Bestandteil B der erfindungsgemäßen Bindemittel sind (Meth)Acryloylgruppen aufweisende Polyurethane, wie sie z.B. in der EP-A 0 410 242 beschrieben sind. Diese Polyurethane sind erhältlich durch Umsetzung von
B1) 30 bis 85 Teilen einer Polyisocyanatkomponente, bestehend aus mindestens einem organischen Polyisocyanat, mit
B2) 15 bis 70 Teilen einer (Meth)Acryloylgruppen aufweisenden Alkoholkomponente, bestehend aus mindestens einem (Meth)Acryloylgruppen aufweisenden, ein- oder mehrwertigen Alkohol, und gegebenenfalls
B3) 0 bis 30 Teilen einer weiteren Polyurethan-Aufbaukomponente, bestehend aus mindestens einer (Meth)Acryloylgruppen-freien Verbindung mit mindestens zwei gegenüber Isocyanatgruppen reaktionsfähigen Gruppen.

Die Mengen der Komponenten sind so zu wählen, daß sich die Summe der Teile (Massenanteile) jeweils auf 100 ergänzt.

Diese Polyurethane haben einen Schmelzpunkt im Temperaturbereich von 40 bis 180 °C und haben einen Massengehalt an olefinischen Doppelbindungen in Form von (Meth)Acryloylgruppen (berechnet als -C=C-, Molmasse = 24 g/mol) von 2 bis 13 %.

Besonders bevorzugt sind Polyurethane, die durch Umsetzung von
- 30 bis 80 Teilen trimerisiertem Isophorondiisocyanat und
- 15 bis 65 Teilen einer oder mehrerer Hydroxyalkylacrylate oder - methacrylate, ausgewählt aus den Hydroxyalkylestern von Acryl- und Methacrylsäure mit 2 bis 5 Kohlenstoffatomen im Alkylrest
- 5 bis 22 Teilen einer weiteren Komponente ausgewählt aus der Gruppe der Alkohole mit 2 oder mehr Hydroxylgruppen, der aliphatischen Amine mit mindestens 2 Aminogruppen, der aliphatischen Aminoalkohole mit je mindestens einer Hydroxyl- und Aminogruppe, und der Polyhydroxypolyäther und -ester mit mindestens zwei Hydroxylgruppen und einer molaren Masse zwischen 200 und 1000 g/mol
erhältlich sind.

Ebenfalls bevorzugt sind Polyurethane, die durch Reaktion von Isophorondiisocyanat, Tetramethylxylylendiisocyanat oder Diisocyanatotoluol oder deren Gemischen mit Trimethylolpropan, Glycerin oder Pentaerythrit oder der entsprechenden mit ε-Caprolacton oder Äthylen- bzw Propylenoxid modifizierten Polyole und mit Hydroxyäthyl-, Hydroxypropyl- oder Hydroxybutyl(meth)acrylat erhalten werden.

Die Herstellung dieser Polyurethane erfolgt durch Umsetzung der obengenannten Ausgangskomponenten B1, B2 und B3, wobei Art- und Mengenverhältnisse dieser Ausgangskomponenten vorzugsweise so gewählt werden, daß praktisch isocyanatgruppenfreie Polyurethane mit einer zahlenmittleren Molmasse von 400 bis 10.000 g/mol resultieren. Dementsprechend liegt das Verhältnis der Anzahl aller gegenüber Isocyanatgruppen reaktionsfähigen Gruppen zu der der Isocyanatgruppen zwischen (0,9 bis 1,1) zu (1,1 bis 0,9).

Die Komponente B1 besteht aus mindestens einem organischen Polyisocyanat. Geeignete Polyisocyanate sind beliebige, aus der Polyurethanchemie bekannte, organische Polyisocyanate mit aliphatisch, cycloaliphatisch und/oder aromatisch gebundenen Isocyanatgruppen, die vorzugsweise eine Molmasse von 150 bis 1.500, vorzugsweise 168 bis 800 g/mol aufweisen. Geeignet sind beispielsweise 1-Isocyanato-3,3,5-trimethyl-5-isocyanatomethyl-cyclohexan(Isophorondiisocyanat, IPDI), Tetramethylxylylendiisocyanat (TMXDI), Hexamethylendiisocyanat (HDI), Trimethylhexamethylendiisocyanat, 4,4'-Diisocyanatodicyclohexylmethan, 4,4'-Diisocyanatodiphenylmethan, dessen technische Gemische mit 2,4-Diisocyanatodiphenylmethan und gegebenenfalls den höheren Homologen dieser Diisocyanate, 2,4-Diisocyanatotoluol und dessen technische Gemische mit 2,6-Diisocyanatotoluol, sowie Copolymerisate von α,α'-Dimethyl-meta-isopropenylbenzylisocyanat (TMI).

Ebenfalls geeignet sind Biuret-, Isocyanurat-, Urethan- oder Harnstoff-modifizierte Polyisocyanate auf Basis dieser einfachen Polyisocyanate, sowie die dimeren Uretdione und trimeren Isocyanurate dieser Polyisocyanate. Diese Derivate weisen im allgemeinen eine Molmasse bis ca. 1000 g/mol auf. Die Herstellung derartiger Derivate ist beispielsweise in US-PS 3,124,605, US-PS 3,183,112, US-PS 3,919,218 oder US-PS 4,324,879 beschrieben.

Bevorzugt werden als Komponente B1 2,4-Diisocyanatotoluol oder dessen technische Gemische mit bis zu 35 %, bezogen auf die Masse des Gemischs, an 2,6-Di-isocyanatotoluol, IPDI, TMXDI und/oder durch Di- oder Trimerisierung von IPDI, TMXDI oder HDI erhaltene Polyisocyanate verwendet.

Die Komponente B2 besteht aus mindestens einem (Meth)Acryloylgruppen aufweisenden, ein- oder mehrwertigen Alkohol. Hierunter sind insbesondere Hydroxyalkylester der Acrylsäure oder Methacrylsäure mit vorzugsweise 2 bis 4 Kohlenstoffatomen im Hydroxyalkylrest wie Hydroxyäthyl(meth)acrylat, 2- und 3-Hydroxypropyl(meth)acrylat, 2-, 3- und 4-Hydroxybutyl(meth)acrylat zu verstehen. Es können aber auch in begrenzter Menge Umsetzungsprodukte dieser Hydroxyalkylacrylate mit Caprolacton mitverwendet werden.

Daneben können aber auch Umsetzungsprodukte von Acrylsäure mit Di- oder Polyepoxiden, wie z.B. die Diglycidyläther des Bisphenol-A oder F, des Hexandiol, Butandiol oder Neopentylglykol sowie des Cyclohexandimethanol mitverwendet werden. Diese Produkte besitzen dann auch die Eigenschaften der Komponente B3 und können kettenverlängernd wirken. Ferner eignen sich auch Ester der Acryl- oder Methacrylsäure mit mehrwertigen Alkoholen wie drei-, vier- oder fünfwertigen Alkoholen, wobei im Mittel mindestens eine Hydroxylgruppe des mehrwertigen Alkohols unverestert bleiben muß. Beispiele hierfür sind Trimethylolpropandiacrylat und Pentaerythrittriacrylat.

Die Komponente B3 ist ausgewählt aus Verbindungen mit mindestens zwei gegenüber Isocyanatgruppen reaktionsfähigen Gruppen, insbesondere mindestens zwei, vorzugsweise 2 bis 4 und besonders bevorzugt 2 bis 3 alkoholischen Hydroxylgruppen oder gegebenenfalls auch Aminogruppen. Die als Komponente B3 bzw. als Teil der Komponente B3 besonders gut geeigneten Verbindungen weisen eine Molmasse von 62 bis 1000 g/mol auf. Beispielhaft genannt seien Äthylenglykol, 1,2- und 1,3-Propandiol, Neopentylglykol, Glycerin, Trimethylolpropan, Trishydroxyläthylisocyanurat und Pentaerythrit oder Diäthanolamin. Weiterhin als Komponente B3 bzw. als Teil der Komponente B3 geeignet, jedoch weniger bevorzugt, sind die aus der Polyurethanchemie an sich bekannten höhermolekularen Verbindungen mit gegenüber Isocyanatgruppen reaktionsfähigen Gruppen, insbesondere Hydroxylgruppen, wie beispielsweise die bekannten Polyhydroxypolyäther oder -polyester mit Molmassen über 200 g/mol. Genannt seien hier Polycaprolactone oder Polycarbonatdi- oder triole. Es bietet sich aber auch die Mitverwendung von Polyaminen und Polyhydroxypolyaminen an. Die Reaktion von Isocyanatendgruppen mit Aminogruppen führt zur Bildung von Harnstoffgruppen, dadurch wird die Glastemperatur dieser Polyurethane erhöht.

Geeignete Polyamine sind die Alkylendiamine wie Äthylendiamin, Propylendiamin, 2-Methylpentamethylendiamin, Hexamethylendiamin, Trimethylhexamethylendiamin, Neopentyldiamin, Octamethylendiamin, Triacetondiamin, Dioxadecandiamin und höhere Homologe, cycloaliphatische Diamine wie 1,2-, 1,3- oder 1,4-Cyclohexandiamin; 4,4'-Methylen-bis-cyclohexylamin, 4,4'-Isopropylen-bis-cyclohexylamin, Isophorondiamin, Tricyclododecenyldiamin, Menthandiamin, 4,4'-Diamino-3,3'-dimethyl-di-cyclohexylmethan,3-Aminomethyl-1-(3-aminopropyl-1-methyl)-4-methylcyclohexan, m-Xylylendiamin, N-Methyläthylendiamin, N-Aminoäthylpiperazin, 2-Aminoäthylpiperazin, N,N'-Dimethyläthylendiamin und -propylendiamin; aliphatische Polyamine wie Diäthylentriamin, Triäthylentetramin, Tetraäthylenpentamin, Pentaäthylenhexamin, Iminobispropylamin, Methyliminobispropylamin, Bis(hexamethylen)triamin und Tetrapropylenpentamin.

Ferner sind auch solche Amine geeignet, die neben sekundären oder primären Aminogruppen noch Hydroxylgruppen enthalten wie Hydroxyäthyldiäthylentriamin oder Bishydroxyäthyldiäthylentriamin. Weiterhin kommen Hydroxyäthylamine und -propylamine in Frage wie beispielsweise Monoäthanolamin, Diäthanolamin, Aminoäthyläthanolamin, N-(2-hydroxypropyl)äthylendiamin, Mono-, Di-(n- oder iso-)propanolamin, Äthylenglykol-bis-propylamin, Neopentanolamin, Methyläthanolamin, 2-(2-Aminoäthoxy)-äthanol, 3-Amino-propyl-trialkoxysilan (alkoxy = methoxy-, äthoxy-, tridecyloxy-) und 2-Amino-2-hydroxy-methyl-1,3-propandiol.

Bevorzugte (Meth)Acryloylgruppenhaltige Polyurethane sind z.B. die Umsetzungsprodukte von Isocyanuratgruppen aufweisendem trimerisierten Isophorondiisocyanat mit Hydroxyäthylacrylat oder Hydroxypropylacrylat oder die mit Trimethylolpropan, Glycerin oder Pentaerythrit bzw. die entsprechend mit ε-Caprolacton oder Äthylen- bzw. Propylenoxid modifizierten, verzweigten Umsetzungsprodukte von IPDI oder TMXDI mit Hydroxyäthylacrylat oder Hydroxypropyl- oder Hydroxybutylacrylat.

Die Herstellung der Polyurethane durch Umsetzung der genannten Ausgangskomponenten kann in inerten Lösungsmitteln, wie beispielsweise Aceton, Äthylacetat, Butylacetat oder Toluol oder in der Schmelze erfolgen, wobei vorzugsweise Reaktionstemperaturen von 20 bis 150 °C, insbesondere 20 bis 140 °C eingehalten werden. Vorzugsweise wird so vorgegangen, daß zunächst in einem ersten Reaktionsschritt die Umsetzung zwischen der Komponente B1 und der Komponente B2 durchgeführt wird, worauf sich die Umsetzung des so erhaltenen Umsetzungsprodukts mit der Komponente B3 anschließt, bis der Isocyanat-Massengehalt unter 0,1 % abgefallen ist.

Die zum Polyurethan führende Additionsreaktion kann in an sich bekannter Weise mittels geeigneter Katalysatoren wie beispielsweise Zinnoctoat, Dibutylzinndilaurat oder tertiären Aminen wie Dimethylbenzylamin beschleunigt werden. Das als Umsetzungsprodukt anfallende Polyurethan bzw. Urethanacrylat kann andererseits durch Zugabe geeigneter Inhibitoren und Antioxidantien wie beispielsweise Phenole und/oder Hydrochinone in Massenanteilen von jeweils 0,001 bis 0,3%, bezogen auf Polyurethan, vor vorzeitiger und unerwünschter Polymerisation geschützt werden. Der Zusatz dieser Hilfsmittel kann vor, gleichzeitig und/oder im Anschluß an die zum Polyurethan führende Umsetzung erfolgen.

Nach beendeter Umsetzung wird das gegebenenfalls verwendete Lösungsmittel wieder entfernt. Dies kann z.B. durch Erwärmen der Reaktionslösung unter Vakuum auf 60 bis 100 °C geschehen. Die Polyurethane sollten nicht mehr als 1 bis 2 % Restlösungsmittel enthalten.

Lösungsmittelfreie Polyurethane erhält man auch durch Herstellung der Produkte in nichtprotischen, wassermischbaren Lösungsmitteln wie z.B. Ketonen (Aceton), THF, DMF oder Dimethyldiglykol und anschließender Fällung dieser Lösungen in einen Überschuß von Wasser. Nach Abfiltrieren des ausgefallenen festen Harzes und nach Trocknung weisen diese Produkte keine Restlösungsmittelgehalte mehr auf, was zu einer wesentlichen Verbesserung der Lagerstabilität führt. In verschiedenen Fällen ist auch die Fertigung des Polyurethanacrylats in der Schmelze möglich, wobei besonders vorteilhaft lösungsmittel- und wasserfreie Produkte in einem Fertigungsschritt erhalten werden.

Der dritte Bestandteil C der erfindungsgemäßen Bindemittel sind feste reaktive Verlaufsadditive mit mindestens einer olefinischen Doppelbindung und mindestens einer polaren elektronegativen Gruppe. Bevorzugt steht mindestens eine Doppelbindung in unmittelbarer Nachbarschaft zu der polaren Gruppe. Die polare elektronegative Gruppe ist ausgewählt aus Carbonsäureester-Gruppen, Carbonsäureamidgruppen, Carbonsäurehydrazidgruppen, Urethan- und Harnstoff-gruppen. Im Fall der Carbonsäurederivate ist es besonders bevorzugt, daß mindestens eine olefinische Doppelbindung mit der Carbonylgruppe des Carbonsäurederivats ein konjugiertes Doppelbindungssystem bildet. Die Komponenten gemäß C haben Schmelzpunkte oberhalb der Raumtemperatur, vorzugsweise oberhalb 30 °C. Bevorzugt sind beispielsweise Verbindungen mit einer oder zwei Methacryl- oder Acrylgruppen, die einen Schmelzpunkt von über 30 °C aufweisen und eine Molmasse von 100 bis 1500 g/mol haben können. Beispielhaft seien an dieser Stelle Diacetonacrylamid, Acrylamid, Acrylamidoglykolsäure, 2-Methoxy-2-acrylamido-glykolsäuremethylester (®MAGME, Handelsbezeichnung der Fa. American Cyanamid), N,N-Methylenbisacrylamid und die Bisaddukte von Hydroxyäthyl- oder Hydroxypropylacrylat an Hexamethylendiisocyanat, Dicyclohexylmethandiisocyanat, Isophorondiisocyanat, Tetramethylxylylendiisocyanat, Diphenylmethandiisocyanat oder Toluylendiisocyanat genannt.

Diese reaktiven Additive können bei der Pulverlackherstellung dem Lack zugesetzt werden, sie können aber besonders vorteilhaft schon bei der Herstellung des Urethanacrylats als ein festes Lösungsmittel mitverwendet werden, so daß man eine homogene Schmelze aus niedermolekularem Acryladditiv und Polyurethanacrylat erzeugt, die dann mit dem ungesättigtem Polyesterharz verarbeitet werden kann.

Für den Einsatz in UV-härtbaren Pulverlacken werden die (Meth)Acryloylgruppen aufweisenden Polyurethane B mit den festen ungesättigten Polyestern A und den reaktiven Additiven C gemischt. Die Mischungsverhältnisse können dabei je nach gewünschter lacktechnischer Zielsetzung in einem weiten Bereich variiert werden, vorzugsweise kann der Massenanteil der niedermolekularen reaktiven Acrylkomponente 0,5 bis 15 % betragen, vorzugsweise 0,5 bis 5 %, wobei sich die Ergänzung auf 100 % durch die Mischung aus dem ungesättigten Polyester und dem Urethanacrylat ergibt. Der Anteil einer dieser Komponenten an dieser Ergänzung kann 10 bis 95 % betragen, wobei dann der Anteil der anderen Komponente den Rest bis 100 % ausmacht.

Die auf diese Weise erhaltenen Mischungen der drei Komponenten A, B und C ergeben wertvolle Bindemittel für Pulverlacke. Sie können ohne weitere Zusätze als hitze- oder als strahlenvernetzbare Pulver-Klarlacke verarbeitet werden (in welchem Falle das Bindemittel mit dem Überzugsmittel identisch ist) oder vorzugsweise jedoch gemeinsam mit den aus der Lacktechnologie üblichen Hilfs- und Zusatzmitteln, wie beispielsweise Pigmenten, wie z.B. Titandioxid, zusätzlichen Verlaufsmitteln, wie z.B. Polybutylacrylat oder Siliconen und/oder anderen Zusatzstoffen. Diese Mischungen werden auf Extrudern oder Knetern bei Temperaturen von ca. 70 bis 140, vorzugsweise 80 bis 120 °C, homogenisiert und danach durch Abkühlen verfestigt. Der hierbei anfallende Feststoff wird dann in an sich bekannter Weise gemahlen und durch Sieben von groben Kornanteilen, vorzugsweise zumindest von solchen mit einer oberhalb 0,1 mm liegenden Korngröße befreit.

Die so hergestellten pulverförmigen Überzugsmittel können nach üblichen Pulverauftragsverfahren, wie z.B. elektrostatischem Pulversprühen oder Wirbelsintern, auf die zu überziehenden Formteile aufgebracht werden. Im Falle von Holz als Substrat kann z.B. vor dem elektrostatischen Versprühen noch ein Leitfähigkeitshilfsmittel aufgebracht werden. Im allgemeinen eignen sich diese Bindemittel sowohl für die Kalt- und Heißbeschichtung; im Falle von großflächigen Substraten wie z.B. Holz-, oder Metallplatten oder Papierbahnen ist auch eine vertikale Beschichtung möglich, ohne daß es zu einem Zusammenbacken des Pulvers kommt. Bei diesem Verfahren kann unter Umständen auch auf ein elektrostatisches Versprühen verzichtet werden. Die erfindungsgemäßen Überzugsmassen können zum Lackieren von Substraten, wie Holz, Glas, Metall, Papier oder Kunststoff verwendet werden.

Die Härtung der Überzüge kann entweder, wenn dem Pulverlack ein Radikalkettenstarter, z.B. ein Peroxid zugesetzt worden ist, durch Erhitzen auf Temperaturen von 90 bis 220 °C, vorzugsweise 120 bis 190 °C, oder durch die Einwirkung von energiereicher Strahlung wie UV- oder Elektronenstrahlen auf die Lackschmelze erfolgen.

Im Fall der thermischen Vernetzung wird zur Beschleunigung der Härtungsreaktion bevorzugt ein Radikalkettenstarter zugesetzt, also eine Verbindung, die bei höherer Temperatur durch Zerfall Radikale bildet. Diese Radikale starten die Polymerisationsreaktion. Geeignete Verbindungen sind solche, die üblicherweise zur thermisch induzierten Polymerisation von Vinylverbindungen wie Styrol oder Acrylpolymeren eingesetzt werden, beispielsweise organische Peroxide, Perester und Hydroperoxide sowie aliphatische Azoverbindungen. Die Auswahl erfolgt so, daß die Zerfallsgeschwindigkeit des Radikalbildners bei der Härtungstemperatur genügend hoch ist. Geeignete Radikalbildner für den Zweck dieser Erfindung sind beispielsweise Di-tert.-butylperoxid, Diisopropylpercarbonat, Cumolhydroperoxid, Azo-bis-isobutyronitril, Azo-bis-cyclobutannitril und Azo-bis-cyanocyclohexan.

Im Falle der Vernetzung mittels UV-Bestrahlung ist es notwendig, den Überzugsmassen vor der Homogenisierung Photoinitiatoren hinzuzufügen. Als Photoinitiatoren sind die üblicherweise eingesetzten Verbindungen geeignet, wie sie z.B. in der Monographie von J. Kosar, "Light-Sensitive Systems", J. Wiley & Sons, New York-London oder wie sie z.B. in "UV & EB Curing Formulations for Printing Inks, Coatings & Paints", ISBN 0 947798 02 1 oder in der deutschen Offenlegungsschrift DE-A 38 15 622 beschrieben werden.

Wenn man sehr glatte Überzüge erzielen will, oder wenn man thermisch empfindliches Material pulverbeschichten will, kann man auch sehr vorteilhaft derart verfahren, daß man zunächst das applizierte Pulver mit einem IR-Strahler oberflächlich aufschmilzt, bis das Material verlaufen ist. In einem zweiten Schritt kann man dann diese Pulverlackschmelze mittels UV-Licht oder mittels Elektronenstrahlen aushärten.

Als Photoinitiatoren sind besonders solche Verbindungen geeignet, die in freier Form vorliegen und pulverisierbar sind. Beispiele hierfür sind 1-Hydroxycyclohexylphenylketon, Benzildimethylketal oder, bei pigmentierten Systemen, 2-Methyl-1-[4-(methylthio)phenyl]-2-morpholino-propanol-1oderTrimethyl-benzoyldiphenyl-phosphinoxid.

Weiterhin gut geeignet sind Benzoinäther wie Benzoinisopropyläther, Benzilketale, wie z.B. Benzildimethylketal und Hydroxyalkylphenole, wie z.B. 2-Hydroxy-2-methyl-1-phenylpropan-1-on.

Die erwähnten Photoinitiatoren, die je nach Verwendungszweck der erfindungsgemäßen Massen zu 0,1 bis 10 %, vorzugsweise 0,1 bis 5 %, bezogen auf die Masse des Bindemittels eingesetzt werden, können als einzelne Substanz oder, wegen häufiger vorteilhafter synergistischer Effekte, auch in Kombination miteinander verwendet werden.

Erfolgt die Aushärtung mit Hilfe von Elektronenstrahlen, so liegt deren Energie üblicherweise zwischen 50 und 500 keV.

In den folgenden Beispielen sind alle Prozentangaben und Angaben von Teilen als Massengehalte bzw. Massenanteile zu verstehen.

### Beispiel 1 (ungesättigter Polyester)

850 Teile Äthylenglykol und 1180 Teile Terephthalsäure und 2 Teile Dibutylzinnoxid werden am Wasserabscheider auf 190 bis 200 °C erhitzt. Nach vollständiger Auflösung der Terephthalsäure wird auf 160 °C abgekühlt und mit 570 Teilen Maleinsäureanhydrid und 0,3 Teilen Hydrochinon versetzt. Man erhitzt nun wieder langsam auf 195 bis 220 °C und rührt bei dieser Temperatur solange nach, bis eine Säurezahl unter 25 mg KOH/g erreicht ist. Nach Abdestillieren niedermolekularer flüchtiger Oligomere im Vakuum kühlt man ab und erhält einen klaren, festen, ungesättigten Polyester, der eine Säurezahl von 24 mg KOH/g und eine Hydroxylzahl von 36 mg KOH/g aufweist. Der Schmelzpunkt des Produktes beträgt 88 bis 92 °C.

### Beispiel 2 (Acrylat)

666 Teile Isophorondiisocyanat (NCO-Gehalt: 37,5 %) werden mit 1 Teil Dibutylzinndilaurat und 3 Teilen Hydrochinonmonomethyläther versetzt. Nach Erwärmen auf 60 bis 70 °C werden 371 Teile 2-Hydroxypropylacrylat zugetropft und anschließend wird bis zu einem NCO-Gehalt unter 13 % nachgerührt.
Unter kräftigem Rühren und langsamen Steigern der Reaktionstemperatur auf 120 bis 130 °C werden dann 103 Teile Glycerin binnen 1 h zugetropft; man läßt noch 60 min lang nachrühren und gießt dann die Harzschmelze in eine Wanne aus. Nach Abkühlung und Mahlen der Schmelze erhält man ein weißes Pulver mit einer Schmelztemperatur von 70 bis 80 °C, einer Schmelzviskosität bei 120 °C von 65 Pas und einem Doppelbindungsgehalt von 5,7%.

### Beispiel 3 (Acrylat)

666 Teile Isophorondiisocyanat (NCO-Gehalt: 37,5 %) werden mit 1 Teil Dibutylzinndilaurat und 3 Teilen Hydrochinonmonomethyläther versetzt. Nach Zugabe von 80 Teilen Diacetonacrylamid wird auf 70 bis 80 °C erwärmt und es werden dann 371 Teile 2-Hydroxypropylacrylat zugetropft und nachgerührt bis ein NCO-Gehalt unter 10 % erreicht ist.

Unter kräftigem Rühren und langsamen Steigern der Reaktionstemperatur auf 120 bis 130 °C werden dann 103 Teile Glycerin binnen 1 h zugetropft; man läßt noch 60 min lang nachrühren und gießt dann die Harzschmelze in eine Wanne aus. Nach Abkühlung und Mahlen der Schmelze erhält man ein weißes Pulver mit einem Schmelzpunkt von 49 bis 63 °C und einer Schmelzviskosität bei 120 °C von 7 Pas.

### Pulverlackherstellung und Applikation:

### Beispiel 4

630 Teile des ungesättigten Polyesters aus Beispiel 1 und 270 Teile des Acrylats aus Beispiel 2 und 30 Teile Diacetonacrylamid werden mit 40 Teilen Irgacure® 651 (handelsüblicher Photoinitiator der Firma Ciba-Geigy) und mit 30 Teilen Additol® XL 496 (handeslübliches Verlaufsmittel der Hoechst AG) vermischt, extrudiert und zu einem Pulver mit einer durchschnittlichen Korngröße von 40 µm vermahlen.
Nach Applikation auf gereinigte Eisenbleche werden die Lackfilme 10 min auf 140 °C erhitzt und anschließend mit einem UV-Strahler (80 W, 10 cm Abstand, 10 m/min) bestrahlt. Man erhält einen lösungsmittelfesten, harten, kratzbeständigen Überzug.

### Beispiel 5

530 Teile des ungesättigten Polyesters aus Beispiel 1 und 400 Teile des Acrylats aus Beispiel 3 werden mit 40 Teilen Irgacure® 651 (handelsüblicher Photoinitiator der Firma Ciba-Geigy) und mit 30 Teilen Additol® XL 496 (handeslübliches Verlaufsmittel der Hoechst AG) vermischt, extrudiert und zu einem Pulver mit einer durchschnittlichen Korngröße von 40 µm vermahlen.
Nach Applikation auf gereinigte Eisenbleche werden die Lackfilme mit einem IR-Strahler aufgeschmolzen und anschließend mit einem UV-Strahler (80 W, 10 cm Abstand, 10 m/min) bestrahlt. Man erhält einen sehr glatten, lösungsmittelfesten, harten und kratzbeständigen Überzug.

### Beispiel 6

630 Teile des ungesättigten Polyesters aus Beispiel 1 und 270 Teile des Acrylats aus Beispiel 2 und 30 Teile 2-Methoxy-2-acrylamidoglykolsäuremethylester (MAGME) werden mit 40 Teilen Irgacure® 651 (handelsüblicher Photoinitiator der Firma Ciba-Geigy) und mit 30 Teilen Additol® XL 496 (handeslübliches Verlaufsmittel der Hoechst AG) vermischt, extrudiert und zu einem Pulver mit einer durchschnittlichen Korngröße von 40 µm vermahlen.
Nach Applikation auf gereinigte Eisenbleche werden die Lackfilme 10 min auf 140 °C erhitzt und anschließend mit einem UV-Strahler (80 W, 10 cm Abstand, 10 m/min) bestrahlt. Man erhält einen sehr gut verlaufenden, lösungsmittelfesten, harten kratzbeständigen Überzug.

## Patentansprüche

1. Bindemittel für Pulverlacke enthaltend einen festen, ungesättigten Polyester A und ein (Meth)Acryloylgruppen enthaltendes Polyurethan B und ein unter Härtungsbedingungen reaktives, festes Verlaufsadditiv C mit mindestens einer olefinischen Doppelbindung und mindestens einer polaren elektronegativen Gruppe, ausgewählt aus Carbonsäureester-Gruppen, Carbonsäureamidgruppen, Carbonsäurehydrazidgruppen, Urethan- und Harnstoff-gruppen.

2. Bindemittel nach Anspruch 1, enthaltend 10 bis 90 % der Komponente A, 80 bis 5 % der Komponente B und 0,5 bis 15 % der Komponente C.

3. Bindemittel nach Anspruch 1, dadurch gekennzeichnet, daß die Komponente A erhältlich ist durch Kondensation von ungesättigten Dicarbonsäuren, deren Anhydriden, oder einer Mischung von Säuren und Anhydriden, gegebenenfalls zusammen mit gesättigten Carbonsäuren, und mehrwertigen Alkoholen.

4. Bindemittel nach Anspruch 1, dadurch gekennzeichnet, daß die Komponente A Hydroxylzahlen von 5 bis 120 mg KOH / g, Säurezahlen von 2 bis 60 mg KOH / g, eine Viskosität von weniger als 100 000 mPa·s, einen Alkengruppen-Massengehalt von 2 bis 20 % und einen Schmelzpunkt von 50 bis 130 °C aufweist.

5. Bindemittel nach Anspruch 1, dadurch gekennzeichnet, daß die Komponente B durch Umsetzung von
B1) 35 bis 80 Teilen einer Polyisocyanatkomponente, bestehend aus mindestens einem organischen Polyisocyanat, mit
B2) 15 bis 70 Teilen einer (Meth)Acryloylgruppen aufweisenden Alkoholkomponente, bestehend aus mindestens einem (Meth)Acryloylgruppen aufweisenden ein- oder mehrwertigen Alkohol, und
B3) 0 bis 30 Teilen einer weiteren Aufbaukomponente, bestehend aus mindestens einer (Meth)Acryloylgruppen-freien Verbindung mit gegenüber Isocyanatgruppen reaktionsfähigen Gruppen,
erhältlich ist.

6. Bindemittel nach Anspruch 1, dadurch gekennzeichnet, daß bei der Herstellung der Komponente B als Komponente B1 trimerisiertes, Isocyanurat-Gruppen enthaltendes Isophorondiisocyanat und als Komponente B2 Hydroxyäthyl-, Hydroxypropyl-, oder Hydroxybutyl(meth)acrylat eingesetzt wird.

7. Bindemittel nach Anspruch 1, dadurch gekennzeichnet, daß die Komponente B erhalten wird durch Reaktion eines Polyisocyanats B1, ausgewählt aus Isophorondiisocyanat, Tetramethylxylylendiisocyanat, Diisocyanatotoluol und deren Gemischen mit einer Aufbaukomponente B3, ausgewählt aus Trimethylolpropan, Glycerin und Pentaerythrit sowie den entsprechenden mit ε-Caprolacton oder Äthylen- oder Propylenoxid modifizierten Polyole, und mit einer (Meth)Acryloylgruppen-haltigen Alkoholkomponente B2, ausgewählt aus Hydroxyäthyl-, Hydroxypropyl- und Hydroxybutyl(meth)acrylat.

8. Bindemittel nach Anspruch 1, dadurch gekennzeichnet, daß das Verlaufsadditiv C eine Verbindung mit einer Schmelztemperatur von 35 bis 180 °C ist.

9. Bindemittel nach Anspruch 1, dadurch gekennzeichnet, daß die Komponente C ausgewählt ist aus Diacetonacrylamid, Acrylamid, Acrylamidoglykolsäure, 2-Methoxy-2-acrylamidoglykolsäuremethylester, den entsprechenden Methacrylverbindungen und den Bisaddukten von Hydroxyäthyl- oder Hydroxypropyl(meth)acrylat an Hexamethylen-, Isophoron-, Toluylen-, Tetramethylxylylen-, Diphenylmethan- oder Dicyclohexylmethylendiisocyanat.

10. Bindemittel nach Anspruch 1, dadurch gekennzeichnet, daß sie zusätzlich einen oder mehrerer Photoinitiatoren enthalten in einer Menge von 0,1 bis 10 %, bezogen auf die Masse des Pulverlacks.

11. Verfahren zur Herstellung der Bindemittel nach Anspruch 1, dadurch gekennzeichnet, daß das reaktive Verlaufsmittel C als Lösungsmittel bei der Herstellung des Urethanacrylats zu Beginn oder im Verlauf der Reaktion zugegeben wird.

12. Verwendung der Bindemittel nach Anspruch 1 in Pulverlacken, die thermisch in Gegenwart von Peroxiden oder durch Bestrahlen mit UV-Licht oder Elektronenstrahlen gehärtet werden.

13. Verwendung der Bindemittel nach Anspruch 1 in Pulverlacken, die vor dem Härten durch Bestrahlen mit Infrarotlicht auf dem Substrat aufgeschmolzen werden.

14. Verwendung der Bindemittel nach Anspruch 1 in Pulverlacken zum Beschichten von Holz, Glas, Kunststoffen, Metall und Papier.

## Claims

1. A binder for powder coatings, comprising a solid, unsaturated polyester A and a (meth)acryloyl-containing polyurethane B and solid flow additive C which is reactive under curing conditions and has at least one olefinic double double bond and at least one polar electronegative group selected from carboxylic ester groups, carboxamide groups, carboxylic hydrazide groups, urethane and urea groups.

2. A binder as claimed in claim 1, comprising from 10 to 90 % of component A, from 80 to 5 % of component B and from 0.5 to 15 % of component C.

3. A binder as claimed in claim 1, wherein component A is obtainable by condensation of unsaturated dicarboxylic acids, their anhydrides, or a mixture of acids and anhydrides, together if desired with saturated carboxylic acids, and polyhydric alcohols.

4. A binder as claimed in claim 1, wherein component A has hydroxyl numbers of from 5 to 120 mg of KOH/g, acid numbers of from 2 to 60 mg of KOH/g, a viscosity of less than 100,000 mPa·s, a content by mass of alkene groups of from 2 to 20 % and a melting point of from 50 to 130°C.

5. A binder as claimed in claim 1, wherein component B is obtainable by reacting
B1) from 35 to 80 parts of a polyisocyanate component comprising at least one organic polyisocyanate with
B2) from 15 to 70 parts of a (meth)acryloyl-containing alcohol component comprising at least one (meth)acryloyl-containing, mono- or polyhydric alcohol, and
B3) from 0 to 30 parts of a further structural component comprising at least one (meth)acryloyl-free compound containing groups which are reactive toward isocyanate groups.

6. A binder as claimed in claim 1, wherein, in the course of the preparation of component B, trimerized, isocyanurate-containing isophorone diisocyanate is employed as component B1 and hydroxyethyl, hydroxypropyl or hydroxybutyl(meth)acrylate is employed as component B2.

7. A binder as claimed in claim 1, wherein component B is obtained by reacting a polyisocyanate B1, selected from isophorone diisocyanate, tetramethylxylylene diisocyanate, diisocyanatotoluene and mixtures thereof, with a structural component B3, selected from trimethylolpropane, glycerol and pentaerythritol and the corresponding polyols modified with ε-caprolactone or ethylene or propylene oxide, and with a (meth)acryloyl-containing alcohol component B2, selected from hydroxyethyl, hydroxypropyl and hydroxybutyl (meth)acrylate.

8. A binder as claimed in claim 1, wherein the flow additive C is a compound with a melting temperature of from 35 to 180°C.

9. A binder as claimed in claim 1, wherein component C is selected from diacetone acrylamide, acrylamide, acrylamidoglycolic acid, 2-methoxy-2-acrylamidoglycolic acid methyl ester, the corresponding methacrylic compounds and the bis-adducts of hydroxyethyl or hydroxypropyl (meth)acrylate with hexamethylene, isophorone, tolylene, tetramethylxylylene, diphenylmethane or dicyclohexylmethylene diisocyanate.

10. A binder as claimed in claim 1, which additionally contains one or more photoinitiators in a quantity of from 0.1 to 10 %, based on the mass of the powder coating.

11. A process for the preparation of a binder as claimed in claim 1, which comprises adding the reactive flow agent C as solvent in the preparation of the urethane acrylate at the beginning or in the course of the reaction.

12. The use of a binder as claimed in claim 1 in powder coatings which are cured thermally in the presence of peroxides or by irradiation with UV light or electron beams.

13. The use of a binder as claimed in claim 1 in powder coatings which are melted prior to curing by irradiation with infrared light on the substrate.

14. The use of a binder as claimed in claim 1 in powder coatings for the coating of wood, glass, plastics, metal and paper.

## Revendications

1. Liants pour peintures en poudre, contenant un polyester insaturé solide A et un polyuréthanne contenant des groupes (méth)acryloyle B et un additif de nivelage solide C, réactif dans les conditions du durcissement, avec au moins une liaison oléfinique double et au moins un groupe polaire électronégatif choisi dans le groupe comprenant des groupes esters d'acides carboxyliques, des groupes amides d'acides carboxyliques, des groupes hydrazides d'acides carboxyliques, des groupes uréthanne et des groupes urée.

2. Liants selon la revendication 1, contenant de 10 à 90 % du composant A, de 80 à 5 % du composant B et de 0,5 à 15 % du composant C.

3. Liants selon la revendication 1, caractérisés en ce que le composant A peut être obtenu par condensation d'acides dicarboxyliques insaturés, de leurs anhydrides ou d'un mélange d'acides et d'anhydrides, le cas échéant ensemble avec des acides carboxyliques saturés, et d'alcools multivalents.

4. Liants selon la revendication 1, caractérisés en ce que le composant A présente des indices d'hydroxyle de 5 à 120 mg de KOH/g, des indices d'acide de 2 à 60 mg de KOH/g, une viscosité inférieure à 100 000 mPa·s, une teneur en groupes alcènes de 2 à 20 % en masse et un point de fusion de 50 à 130 °C.

5. Liants selon la revendication 1, caractérisés en ce que le composant B peut être obtenu en faisant réagir :
B1) de 35 à 80 parties d'un composant polyisocyanate comprenant au moins un polyisocyanate organique, avec
B2) de 15 à 70 parties d'un composant alcool contenant des groupes (méth)acryloyle, comprenant au moins un alcool mono- ou multivalent contenant des groupes (méth)acryloyle, et
B3) de 0 à 30 parties d'un autre composant structurel comprenant au moins un composé dépourvu de groupes (méth)acryloyle avec des groupes réactifs vis-à-vis des groupes isocyanate.

6. Liants selon la revendication 1, caractérisés en ce que, pour préparer le composant B, on utilise comme composant B1 un diisocyanate d'isophorone trimérisé contenant des groupes isocyanurate et comme composant B2 un (méth)acrylate d'hydroxyéthyle, hydroxypropyle ou hydroxybutyle.

7. Liants selon la revendication 1, caractérisés en ce que le composant B est obtenu en faisant réagir un polyisocyanate B1 choisi parmi le diisocyanate d'isophorone, le diisocyanate de tétraméthylxylylène, le diisocyanatotoluène et des mélanges de ceux-ci, avec un composant structurel B3 choisi parmi le triméthylolpropane, le glycérol et le pentaérythritol ainsi que les polyols modifiés en conséquence par la ε-caprolactone ou l'oxyde d'éthylène ou propylène, et avec un composant alcoolique contenant des groupes (méth)acryloyle B2 choisi parmi le (méth)acrylate d'hydroxyéthyle, hydroxypropyle ou hydroxybutyle.

8. Liants selon la revendication 1, caractérisés en ce que l'additif de nivelage C est un composé ayant un point de fusion de 35 à 180 °C.

9. Liants selon la revendication 1, caractérisés en ce que le composant C est choisi parmi l'acrylamide de diacétone, l'acrylamide, l'acide acrylamidoglycolique, le 2-méthoxy-2-acrylamidoglycolate de méthyle, les composés méthacryliques correspondants et les produits de bis-addition de l'acrylate d'hydroxyéthyle ou hydroxypropyle avec du diisocyanate d'hexaméthylène, isophorone, toluylène, tétraméthylxylylène, diphénylméthane ou dicyclohexylméthylène.

10. Liants selon la revendication 1, caractérisés en ce qu'ils contiennent en plus un ou plusieurs amorceurs de photopolymérisation en une quantité de 0,1 à 10 %, ramenée à la masse de la peinture en poudre.

11. Procédé de préparation des liants selon la revendication 1, caractérisé en ce que l'agent de nivelage réactif C est ajouté en tant que solvant lors de la fabrication de l'acrylate d'uréthanne au début ou au cours de la réaction.

12. Utilisation des liants selon la revendication 1 dans des peintures en poudre qui sont durcies thermiquement en présence de peroxydes ou par exposition à de la lumière ultraviolette ou à un faisceau d'électrons.

13. Utilisation des liants selon la revendication 1 dans des peintures en poudre qui sont fondues sur le substrat par exposition à un rayonnement infrarouge avant le durcissement.

14. Utilisation des liants selon la revendication 1 dans des peintures en poudre pour le revêtement de bois, de verre, de plastiques, de métal et de papier.
